(19) **Europäisches Patentamt**
**European Patent Office**
**Office européen des brevets**

(11) **EP 2 431 274 B1**

(12) **FASCICULE DE BREVET EUROPEEN**

(45) Date de publication et mention
de la délivrance du brevet:
**03.04.2013 Bulletin 2013/14**

(51) Int Cl.:
***B64C 27/14*** *(2006.01)*    ***B64C 27/28*** *(2006.01)*
***B64D 35/04*** *(2006.01)*

(21) Numéro de dépôt: **11007039.8**

(22) Date de dépôt: **30.08.2011**

(54) **Aéronef à voilure tournante muni d'un moyen propulsif, et procédé appliqué par ledit aéronef**

Drehflügelflugzeug mit einem Antriebsmittel und von diesem Flugzeug angewendeten Verfahren.

Rotary wing aircraft with propulsion means and a method applied by said aircraft.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2010 FR 1003686**

(43) Date de publication de la demande:
**21.03.2012 Bulletin 2012/12**

(73) Titulaire: **EUROCOPTER**
**13725 Marignane Cédex (FR)**

(72) Inventeur: **Vialle, Michel**
**13100 Aix en Provence (FR)**

(74) Mandataire: **GPI & Associés**
**EuroParc de Pichaury**
**Bâtiment B2 - 1er Etage**
**1330 Rue Guillibert de la Lauzière**
**13856 Aix en Provence Cedex 3 (FR)**

(56) Documents cités:
**EP-A1- 2 096 333     WO-A2-2005/005250**
**GB-A- 2 197 629     US-A1- 2006 269 414**

**Description**

La présente invention concerne un aéronef à voilure tournante muni d'un moyen propulsif, et un procédé appliqué par ledit aéronef.

Plus particulièrement, l'invention se rapporte à un hélicoptère hybride alliant à un coût raisonnable l'efficacité du vol vertical de l'hélicoptère conventionnel aux performances à grande vitesse de déplacement permises par l'utilisation d'au moins une hélice propulsive et l'installation de moteurs modernes.

Cet hélicoptère hybride comprend un fuselage à l'avant duquel est prévu le poste de pilotage, une voilure tournante munie d'au moins un rotor principal destiné à entraîner en rotation des pales grâce à au moins un moteur.

De plus, l'hélicoptère hybride est pourvu d'au moins une hélice propulsive placée sur le côté du fuselage, par exemple deux hélices propulsives agencées de part et d'autre du fuselage sur des demi-ailes.

Par ailleurs, l'hélicoptère hybride est équipé d'une chaîne cinématique intégrée permettant au moteur d'entraîner la voilure tournante et les hélices. Cette chaîne cinématique est par exemple munie d'une boîte de transmission de puissance principale en amont de chaque rotor de la voilure tournante.

En vol et hors cas de panne, les vitesses de rotation des hélices et du rotor sont proportionnelles entre elles, le rapport de proportionnalité étant constant.

Par conséquent, la voilure tournante demeure toujours entraînée en rotation par le (ou les) moteur(s), et développe toujours une portance en vol, aussi bien en vol d'avancement qu'en vol stationnaire. L'hélicoptère hybride n'est donc ni un autogire, ni un girodyne, ni un combiné mais un autre type de giravion.

Indépendamment de la nature de l'aéronef à voilure tournante, il est possible de prévoir des moyens de freinage des ensembles sustentateurs et propulsifs, les hélices propulsives et la voilure tournante d'un hélicoptère hybride par exemple.

En effet, pour éviter de dégrader un moteur, on arrête d'abord le moteur puis on freine la voilure tournante par exemple, cette voilure tournante ayant une inertie très élevée.

Pour que le frein agisse uniquement sur la voilure tournante, il est concevable d'agencer une roue libre en aval du moteur.

De plus, en cas de panne du moteur, la roue libre garantit qu'un blocage de ce moteur n'engendre pas un blocage de la rotation de la voilure tournante.

Par exemple, le document WO2007/086906 met en oeuvre des roues libres classiques. Une roue libre classique est usuellement munie d'une portion entraînante et d'une portion entraînable, au moins une bille étant agencée entre une rampe inclinée de la portion entraînante et une surface circulaire de la portion entraînable. Ainsi, lorsque la portion entraînable tourne plus vite que la portion entraînante, ladite bille se trouve au pied de la rampe inclinée ce qui désolidarise les portions entraînable et entraînante. A l'inverse, lorsque la portion entraînante tourne plus vite que la portion entraînable, la bille se dirige vers le haut de la rampe inclinée et se retrouve de fait coincée entre la portion entraînante et la portion entraînable. Par suite, la portion entraînante met en rotation la portion entraînable via ladite bille. Les portions entraînable et entraînante sont alors solidaires en rotation.

On note que les billes d'une telle roue libre peuvent être remplacées par des galets ou des rouleaux.

Outre les roues libres classiques, on connaît des roues libres aptes à être déconnectées qui ne sont absolument pas assimilables à une simple roue libre classique. En effet, une roue libre apte à être déconnectée fonctionne selon deux modes de connexion distincts :

- un mode déconnecté, la portion entraînante de la roue libre ne pouvant en aucun cas mettre en mouvement sa portion entraînable,

- un mode connecté, la portion entraînante de la roue libre mettant en rotation sa portion entraînable dès que la première vitesse de rotation de la portion entraînante devient supérieure ou égale à la deuxième vitesse de rotation de la portion entraînable, alors qu'à l'inverse ladite portion entraînante de la roue libre n'est pas apte à mettre en rotation ladite portion entraînable lorsque la première vitesse de rotation de la portion entraînante est inférieure à la deuxième vitesse de rotation de la portion entraînable.

On note que le mode connecté est de fait parfois dénommé « mode roue libre », les expressions « mode connecté » et « mode roue libre » se rapportant dès lors au même mode de fonctionnement.

Durant le mode connecté, une telle roue libre apte à être déconnectée est soit glissante lorsque la première vitesse de rotation de la portion entraînante est inférieure à la deuxième vitesse de rotation de la portion entraînable, soit entraînante lorsque la première vitesse de rotation de la portion entraînante est supérieure ou égale à la deuxième vitesse de rotation de la portion entraînable.

A l'inverse, durant le mode déconnecté, une telle roue libre apte à être déconnectée est nécessairement glissante.

On se rapportera à la littérature pour trouver des exemples de réalisation d'une roue libre apte à être déconnectée. Par exemple, selon un premier mode de réalisation décrit par le document FR2670553, on remplace les billes d'une roue libre classique par des galets agencés dans une cage que l'on peut déplacer le long de l'axe longitudinal de la roue libre par l'intermédiaire d'un doigt positionné dans une fente hélicoïdale de la cage.

Ainsi, en mode déconnecté, dans une première position, les galets ne se trouvent pas sur des rampes de coincement agencées sur la portion entraînante pour permettre de coincer chaque galet entre les portions entraînante et entraînable, ces galets ne pouvant donc en aucun cas transmettre le mouvement de la portion entraînante à la portion entraînable. Par contre, en mode connecté, les galets se trouvent dans une deuxième position sur les rampes de coincement de manière à être agencés entre les portions entraînante et entraînable pour transmettre le mouvement de la portion entraînante à la portion entraînable le cas échéant.

En opposition aux roues libres classiques, on nomme « roue libre contrôlable » par commodité dans la suite du texte de telles roues libres aptes à être déconnectées dans la mesure où il est possible de contrôler leur mode de fonctionnement, en déplaçant ladite cage par exemple. A l'inverse, une roue libre classique est dénommée « roue libre » ou « roue libre incontrôlable » par commodité dans la suite du texte.

Il est à noter qu'une roue libre apte à être déconnectée est parfois également appelée « roue libre décrabotable » par l'homme du métier. En effet, la succession de rampes sur la portion entraînante fait apparaître des sortes de crabots entre deux rampes adjacentes ce qui justifie l'expression employée. L'expression « roue libre débrayable » peut donc aussi être utilisée pour dénommer une telle roue libre apte à être déconnectée.

En outre, le nouveau concept de l'hélicoptère hybride peut induire une situation particulière au sol.

En effet, suite à un atterrissage, le pilote d'un hélicoptère hybride peut mettre au ralenti les moteurs de l'aéronef sans arrêter la voilure tournante, notamment si ce pilote doit redécoller à brève échéance pour rallier une autre destination.

Pour protéger les passagers au sol à proximité des hélices, il peut être intéressant d'arrêter la rotation des hélices au sol, tout en entraînant la voilure tournante au ralenti.

Par suite, il est possible de prévoir un embrayage en amont de chaque hélice.

Bien qu'efficace, ce dispositif présente des inconvénients. Après le démarrage, l'embrayage va subir des couples importants ce qui risque de faire glisser sa partie menante par rapport à sa partie menée. Il en résulte de fait une usure non négligeable.

De même, au cours du vol, le risque de glissement demeure du fait de la présence de fluctuations de couple parfois importantes.

Dès lors, le dimensionnement d'un tel embrayage conduit à un dispositif lourd et encombrant devant faire l'objet d'actions de maintenances fréquentes et onéreuses.

La présente invention a alors pour objet de proposer un aéronef muni d'une voilure tournante et d'au moins une hélice propulsive entraînées par une installation motrice, l'aéronef permettant d'arrêter l'hélice au sol en ne nécessitant pas l'utilisation d'un embrayage lourd et encombrant.

On note que l'arrière plan technologique comprend le document FR2928192 qui décrit une boîte de transmission de puissance présentant en sortie une vitesse de rotation modifiable.

De même, le document US20060269414 , qui est considéré l'état de la technique le plus proche, présente une boîte de vitesse présentant en sortie une vitesse variable.

Selon l'invention, un aéronef est muni d'une installation motrice qui entraîne une voilure tournante et au moins un moyen propulsif possédant une hélice, l'installation motrice comportant au moins un moteur ayant un arbre de sortie mettant en mouvement une chaîne cinématique afin d'entraîner la voilure tournante, la chaîne cinématique ayant une roue libre principale par moteur.

De plus, l'aéronef est remarquable en ce qu'il comporte un organe de liaison par moteur pourvu d'un arbre d'entraînement et d'une première roue dentée qui sont liés par un embrayage et une roue libre contrôlable principale agencés en parallèle, l'arbre d'entraînement entraînant au moins un moyen propulsif pourvu d'un moyen de freinage de son hélice, la première roue dentée engrenant la chaîne cinématique.

Chaque organe de liaison est donc apte à lier mécaniquement l'arbre de sortie du moteur correspondant à son arbre d'entraînement soit par son embrayage et/ou par sa roue libre contrôlable principale.

Chaque roue libre contrôlable fonctionne alors soit selon un mode déconnecté durant lequel une portion entraînante de la roue libre contrôlable ne peut en aucun cas mettre en mouvement une portion entraînable de cette roue libre contrôlable, soit selon un mode connecté durant lequel la portion entraînante met en rotation la portion entraînable dès qu'une première vitesse de rotation de la portion entraînante devient supérieure ou égale à une deuxième vitesse de rotation de la portion entraînable alors qu'à l'inverse la portion entraînante n'est pas apte à mettre en rotation la portion entraînable lorsque la première vitesse de rotation de la partie entraînante est inférieure à la deuxième vitesse de rotation de la partie entraînable.

Par exemple, la roue libre contrôlable comporte une portion entraînante munie de rampes de coincement, une portion entraînable, et une pluralité de galets disposés dans une cage afin de pouvoir être déplacés longitudinalement. Durant le mode connecté, les galets sont disposés entre la portion entraînante et la portion entraînable sur les rampes de coincement. Au contraire durant le mode déconnecté les galets ne sont pas disposés sur les rampes de coincement, mais entre ces rampes de coincement par exemple.

Ainsi à haute vitesse, on entraîne l'hélice d'un moyen propulsif par une roue libre contrôlable principale pour ne pas être confronté à des glissements.

Par contre, lorsque la vitesse de rotation de l'hélice diminue, un moteur l'entraîne en utilisant l'embrayage. La vitesse de rotation et le couple d'entraînement de l'hélice étant relativement faible, il n'est pas nécessaire de mettre en oeuvre un embrayage de taille importante pour éviter des glissements. A partir de cette vitesse ralentie, on peut débrayer l'embrayage puis freiner l'hélice. On note que le rotor n'est pas arrêté durant cette opération, la première roue dentée étant en amont de l'embrayage et de la roue libre contrôlable principale.

L'aéronef peut comporter une ou plusieurs des caractéristiques additionnelles qui suivent.

Par exemple, l'organe de liaison comporte :

- un premier et un deuxième arbres primaires solidarisés à l'embrayage, le premier arbre primaire étant muni d'une première roue dentée primaire pourvue d'un premier nombre de dents et le deuxième arbre primaire étant muni d'une deuxième roue dentée primaire pourvue d'un deuxième nombre de dents, la première roue dentée primaire étant engrenée avec la deuxième roue dentée primaire et la chaîne cinématique,

- un premier et un deuxième arbres secondaires solidarisés à la roue libre contrôlable principale, le premier arbre secondaire étant muni d'une première roue dentée secondaire pourvue d'un troisième nombre de dents en prise avec la première roue dentée primaire, le deuxième arbre secondaire étant muni d'une deuxième roue dentée secondaire pourvue d'un quatrième nombre de dents en prise avec la deuxième roue dentée primaire, l'arbre d'entraînement étant solidaire en rotation de la deuxième roue dentée secondaire.

De plus, les premier et deuxième arbres primaires étant éventuellement disposés sur un même premier axe de rotation, lesdits premier et deuxième arbres secondaires étant éventuellement disposés sur un même deuxième axe de rotation, les premier et deuxième arbres primaires peuvent parallèles aux premier et deuxième arbres secondaires.

Selon un autre aspect, le premier quotient du troisième nombre de dents par le premier nombre de dents est supérieur à l'unité, le produit de ce premier quotient par un deuxième quotient du deuxième nombre de dents par le quatrième nombre de dents étant aussi supérieur à l'unité.

En outre, il est concevable d'équiper l'aéronef d'au moins un moyen de commande de l'embrayage et de la roue libre contrôlable principale d'au moins un organe de liaison.

Par ailleurs, selon un premier mode de réalisation l'aéronef peut comporter un unique moteur.

Toutefois, selon un deuxième mode de réalisation d'un aéronef bimoteur, cet aéronef peut comporter au moins :

- un premier moteur ayant un premier arbre de sortie entraînant un premier organe de liaison lié à un premier pignon d'entraînement principal de la chaîne cinématique, ce premier pignon d'entraînement principal entraînant un moyen de conjugaison principal par une première roue libre, le moyen de conjugaison entraînant une boîte de transmission de puissance de la voilure tournante, le premier organe de liaison entraînant par un premier arbre d'entraînement au moins un moyen propulsif,

- un deuxième moteur ayant un deuxième arbre de sortie entraînant un deuxième organe de liaison lié à un deuxième pignon d'entraînement principal, ce deuxième pignon d'entraînement principal entraînant le moyen de conjugaison principal par une deuxième roue libre, ledit deuxième organe de liaison entraînant par un deuxième arbre d'entraînement au moins un moyen propulsif.

Selon une première variante du deuxième mode de réalisation, le premier arbre d'entraînement et le deuxième arbre d'entraînement entraîne un moyen de conjugaison secondaire mettant en mouvement au moins un moyen propulsif, chaque moyen propulsif ayant une hélice et un moyen de freinage.

Selon une deuxième variante du deuxième mode de réalisation, l'aéronef comporte au moins :

- un premier arbre d'entraînement du premier organe de liaison qui entraîne un premier moyen d'entraînement d'un premier moyen propulsif, le premier moyen d'entraînement étant mécaniquement relié au moyen de conjugaison principal par une première roue libre contrôlable secondaire,

- un deuxième arbre d'entraînement dudit deuxième organe de liaison qui entraîne un deuxième moyen d'entraînement d'un deuxième moyen propulsif, le deuxième moyen d'entraînement étant mécaniquement relié au moyen de conjugaison principal par une deuxième roue libre contrôlable secondaire.

Dès lors, on peut freiner une hélice en continuant d'entraîner l'autre hélice. Chaque roue libre contrôlable secondaire permet d'assurer l'entraînement du moyen propulsif associé en cas de panne du moteur correspondant. Chaque roue libre contrôlable secondaire peut comprendre les organes décrits précédemment.

Optionnellement, une portion entraînante de la première roue libre contrôlable secondaire est liée au moyen de conjugaison principal et une portion entraînable de la première roue libre contrôlable secondaire est liée au premier moyen d'entraînement, une portion entraînante de la deuxième roue libre contrôlable secondaire est liée au moyen de conjugaison principal et une portion entraînable de la deuxième roue libre contrôlable secondaire est liée au deuxième moyen d'entraînement.

Outre un dispositif, l'invention concerne le procédé mis en oeuvre par ce dispositif.

Selon l'invention, un procédé pour freiner au moins un moyen propulsif à hélice d'un aéronef à voilure tournante tel que décrit précédemment, l'aéronef étant muni d'une installation motrice entraînant une voilure tournante et au moins un moyen propulsif possédant une hélice, l'installation motrice comportant au moins un moteur ayant un arbre de sortie pour mettre en mouvement une chaîne cinématique afin d'entraîner la voilure tournante, la chaîne cinématique ayant une roue libre principale par moteur de type roue libre incontrôlable, l'aéronef comportant un organe de liaison pourvu d'un arbre d'entraînement et d'une première roue dentée liés par un embrayage et une roue libre contrôlable principale agencés en parallèle, l'arbre d'entraînement entraînant au moins un moyen propulsif pourvu d'un moyen de freinage de son hélice, au cours duquel pour freiner l'hélice au sol suite à un atterrissage alors chaque moteur entraîne la voilure tournante via une roue libre principale, est remarquable en ce que :

- durant une étape initiale, la roue libre contrôlable principale est en mode connecté pour entraîner l'hélice, l'embrayage étant débrayé,

- durant une première étape transitoire visant à ralentir la vitesse de rotation de l'hélice, on modifie le pas des pales de l'hélice, afin que ce pas devienne nul, puis on embraye l'embrayage lorsque l'hélice atteint une première vitesse prédéterminée,

- durant une deuxième étape transitoire visant à ralentir la vitesse de rotation de l'hélice, on commande la roue libre contrôlable principale pour la faire fonctionner en mode déconnecté,

- durant une étape de freinage, on débraye l'embrayage lorsque l'hélice atteint une deuxième vitesse prédéterminée puis on active le moyen de freinage du moyen propulsif pour freiner l'hélice.

De plus, l'aéronef comportant une roue libre contrôlable secondaire agencée entre un moyen d'entraînement du moyen propulsif à freiner et la chaîne cinématique permettant à l'installation motrice de mettre en rotation la voilure tournante, durant une étape initiale, la roue libre contrôlable secondaire étant durant l'étape initiale en mode connecté pour que la chaîne cinématique puisse entraîner le moyen propulsif, durant la deuxième étape transitoire visant à ralentir la vitesse de rotation de l'hélice, on peut commander la roue libre contrôlable secondaire pour la faire fonctionner en mode déconnecté.

Par ailleurs, pour accélérer une hélice suite à une étape de freinage :

- on désactive le moyen de freinage du moyen propulsif puis on embraye l'embrayage,

- lorsque le couple développé par le moteur atteint un couple optimal prédéterminé, on contrôle la roue libre contrôlable principale pour la faire fonctionner en mode connecté, et on débraye l'embrayage.

L'invention et ses avantages apparaîtront avec plus de détails dans le cadre de la description qui suit avec des exemples de réalisation donnés à titre illustratif en référence aux figures annexées qui représentent :

- la figure 1, un schéma illustrant un premier mode de réalisation,

- la figure 2, un schéma illustrant une première variante d'un deuxième mode de réalisation, et

- la figure 3, un schéma illustrant une deuxième variante d'un deuxième mode de réalisation.

Les éléments présents dans plusieurs figures distinctes sont affectés d'une seule et même référence.

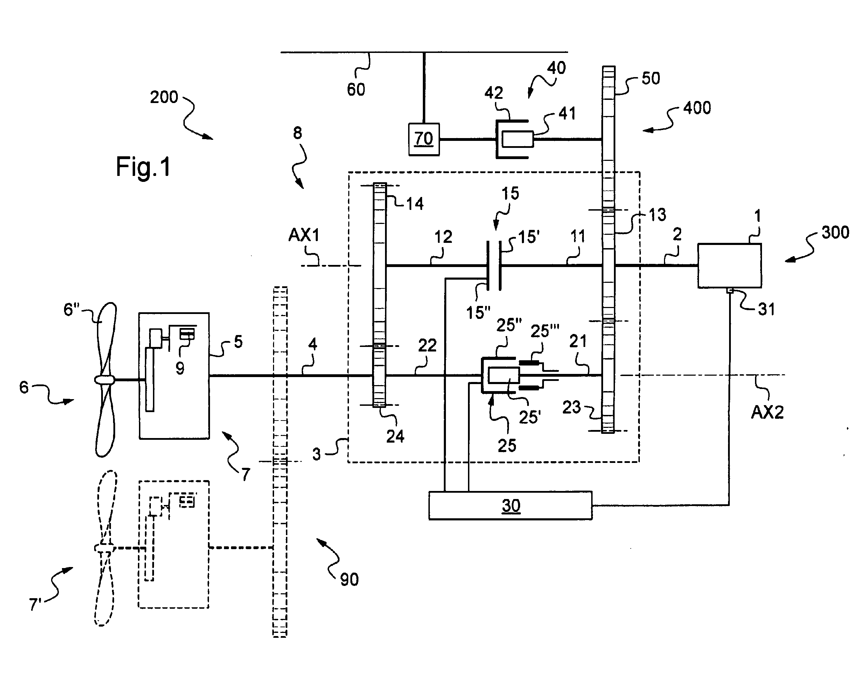

La figure 1 présente un aéronef 200 muni d'une voilure tournante 60 et d'au moins un moyen propulsif 7, 7' selon un premier mode de réalisation.

Indépendamment du mode de réalisation, l'aéronef 200 comprend une installation motrice 300 pour mettre en mouvement une chaîne cinématique 400 reliée à la voilure tournante 60 et pour entraîner le ou les moyens propulsifs 7.

Cette installation motrice 300 comprend au moins un moteur 1 pourvu d'un arbre de sortie 2. La chaîne cinématique 400 possède alors éventuellement un pignon d'entraînement principal 50 et une boîte de transmission de puissance principale 70, une roue libre principale 40 étant disposée entre le pignon d'entraînement principal 50 et la boîte de transmission de puissance principale 70 pour permettre l'autorotation de la voilure tournante 60 en cas de blocage du moteur 1 associé. Par exemple, un organe menant 41 de la roue libre principale 40 est solidaire en rotation du pignon d'entraînement principal 50, un organe mené 42 de la roue libre principale 40 étant solidaire en rotation de la boîte de transmission de puissance principale 70.

La roue libre principale 40 est une roue libre classique, à savoir une roue libre incontrôlable.

De plus, l'aéronef comprend un organe de liaison 8 par moteur 1. Lorsque l'organe de liaison 8 est entraîné par l'arbre de sortie 2 du moteur 1 correspondant, cet organe de liaison 8 met en mouvement d'une part la chaîne cinématique 400 à l'aide d'une première roue dentée 13 et, d'autre part au moins un moyen propulsif 7, 7' par un arbre d'entraînement 4.

Indépendamment du mode de réalisation, l'organe de liaison 8 comporte un embrayage 15, muni d'une part d'une partie menante 15' et d'autre part une partie menée 15", ainsi qu'une roue libre contrôlable principale 25 pourvue d'une portion entraînante 25' et d'une portion entraînable 25". Il est à noter que la partie menante 15' de l'embrayage 15 entraîne en rotation ladite partie menée 15" lorsque l'embrayage 15 est embrayé.

De même, la roue libre contrôlable principale 25 comporte une portion entraînante 25' munie de rampes de coincement, une portion entraînable 25", un moyen de connexion 25''' de cette portion entraînante 25' et de la portion entraînable 25". Le moyen de connexion 25''' peut comprendre une pluralité de moyens de liaison de type galets 25''' disposés dans une cage afin de pouvoir être déplacés longitudinalement par exemple.

Durant un mode déconnecté, représenté sur la figure 1, le moyen de connexion 25''' est en retrait des portions entraînante 25' et entraînable 25". De fait, la portion entraînante 25' et la portion entraînable 25" sont désolidarisées en rotation durant ce mode déconnecté, les moyens de liaison n'étant pas agencés sur les rampes de coincement.

Durant un mode connecté non représenté, le moyen de connexion 25''' est déplacé longitudinalement de manière à être disposé entre les portions entraînante 25' et entraînable 25", les moyens de liaison étant disposés sur les rampes de coincement. La portion entraînante 25' de la roue libre contrôlable principale met alors en rotation la portion entraînable 25" d'une part quand la roue libre est en mode connectée et, d'autre part dès que la vitesse de rotation de la portion entraînante 25' devient supérieure ou égale à la vitesse de rotation de la portion entraînable 25".

On se rapportera à la littérature pour obtenir plus d'informations sur les roues libres contrôlables, si nécessaire.

Par ailleurs, l'organe de liaison 8 comporte un premier arbre primaire 11 et un deuxième arbre primaire 12 solidarisés respectivement à la partie menante 15' et à la partie menée 15" de l'embrayage 15.

De même, l'organe de liaison 8 comporte un premier arbre secondaire 21 et un deuxième arbre secondaire 22 solidarisés respectivement à la portion entraînante 25' et à la portion entraînable 25" de la roue libre contrôlable principale.

Le premier arbre primaire 11 et le deuxième arbre primaire 12 étant disposés sur un même premier axe de rotation AX1, le premier arbre secondaire 21 et le deuxième arbre secondaire 22 sont disposés sur un même deuxième axe de rotation AX2 parallèle au premier axe de rotation AX1.

En outre, le premier arbre primaire 11 étant muni d'une première roue dentée primaire 13 pourvue d'un premier nombre de dents P1, le premier arbre secondaire 21 est muni d'une première roue dentée secondaire 23 pourvue d'un troisième nombre de dents R1 en prise avec la première roue dentée primaire 13. La première roue dentée primaire 13 est engrenée à un pignon d'entraînement principal 50 de la chaîne cinématique 400. Toutefois, la première roue dentée secondaire 23 peut à titre de variante être engrenée à ce pignon d'entraînement principal 50.

De façon semblable, le deuxième arbre primaire 12 étant muni d'une deuxième roue dentée primaire 14 pourvue d'un deuxième nombre de dents P2, le deuxième arbre secondaire 22 est muni d'une deuxième roue dentée secondaire 24 pourvue d'un quatrième nombre de dents R2 en prise avec la deuxième roue dentée primaire 14.

On détermine alors les premier, deuxième, troisième et quatrième nombres de dents P1, P2, R1, R2 à l'aide d'une part d'un premier quotient Q1 du troisième nombre de dents R1 par le premier nombre de dents P1 et, d'autre part, d'un deuxième quotient Q2 du deuxième nombre de dents P2 par le quatrième nombre de dents R2, soit :

$$Q1 = \frac{R1}{P1}$$

$$Q2 = \frac{P2}{R2}$$

Dès lors, les premier et deuxième quotients Q1 et Q2 respectent idéalement les première et deuxième conditions suivantes :

Q1>1

Q1*Q2>1

où « * » représente le signe de la multiplication.

En outre, afin de pouvoir être mécaniquement lié à l'arbre d'entraînement 4 par l'organe de liaison 8, l'arbre de sortie 2 est fixé à la première roue dentée primaire 13 pour lui être solidaire en rotation autour du premier axe de rotation AX1. Toutefois, à titre de variante, l'arbre de sortie 2 pourrait être fixé à la première roue dentée secondaire 23 pour lui être solidaire en rotation autour du deuxième axe de rotation AX2.

Par conséquent, l'arbre d'entraînement 4 est fixé à la deuxième roue dentée secondaire 24 pour lui être solidaire en rotation autour du deuxième axe de rotation AX2. Toutefois, à titre de variante, l'arbre d'entraînement pourrait être fixé à la deuxième roue dentée primaire 14 pour lui être solidaire en rotation autour du premier axe de rotation AX1, cette deuxième roue dentée primaire 14 pouvant être engrenée à la chaîne cinématique 40.

L'aéronef peut de plus comprendre un moyen de commande manuel contrôlé par le pilote, ou un moyen de commande 30 automatique pour commander l'embrayage 15 et la roue libre contrôlable principale 25. Selon cette dernière variante, le moyen de commande 30, tel qu'un calculateur, peut être relié à un capteur 31 de type couplemètre par exemple pour déterminer la phase de fonctionnement de l'installation motrice.

Selon le premier mode de réalisation de la figure 1, l'installation motrice 300 comporte un unique moteur 1 entraînant un organe de liaison 8.

L'arbre d'entraînement 4 de l'organe de liaison est alors connecté à un moyen propulsif 7. Le moyen propulsif 7 peut posséder un organe de transmission 5 muni d'un moyen de freinage 9, l'organe de transmission 5 entraînant une hélice 6 pourvue de pales 6".

Au démarrage, durant une première phase de démarrage durant laquelle le moteur 1 développe un faible couple, l'arbre de sortie 2 du moteur 1 met alors en rotation les premiers arbres primaire 11 et secondaire 21 via la première et la troisième roue dentée 13, 23.

L'embrayage 15 étant débrayé et la roue libre contrôlable principale 25 étant en mode déconnecté, les deuxièmes arbres primaire 12 et secondaire 22 ne sont pas entraînés en rotation ce qui implique que l'arbre d'entraînement 4, et le moyen propulsif 7 demeurent immobiles. Avant leur mise en rotation, les pales de l'hélice 6 doivent être à un pas nul, à savoir un pas pour lequel les hélices ne fournissent aucun effort propulsif.

Par contre, la première roue dentée 13 met en mouvement la chaîne cinématique 400.

Le constructeur ayant défini un régime de ralenti minimal dudit moteur 1, lorsque le moteur 1 atteint son régime minimal de ralenti et donc un premier couple au ralenti, on entre dans une deuxième phase de démarrage ne nécessitant plus l'emploi d'un démarreur.

Sachant que les pales de l'hélice sont à pas nul, on désactive le moyen de freinage 9 de l'hélice 6 puis on peut alors embrayer, à l'aide du moyen de commande 30, l'embrayage 15 afin que la partie menante 15' soit en contact avec la partie menée 15". Le deuxième arbre primaire 12 effectue dès lors un mouvement rotatif et entraîne, via la deuxième et la quatrième roues dentées 14, 24, l'arbre d'entraînement 4 ainsi que le moyen propulsif 5. Ainsi on met en rotation l'hélice 6.

De plus, le deuxième arbre secondaire 22 est aussi mis en rotation. Néanmoins, on note que les portions entraînante 25' et entraînable 25" de la roue libre contrôlable principale 25 ne sont pas en prises l'une avec l'autre, la roue libre contrôlable principale 25 étant déconnectée.

Le couple étant faible, un embrayage 15 de dimensions raisonnables suffit pour fonctionner sans glissement et donc pour supporter un couple optimal compris entre un premier couple au ralenti et un deuxième couple maximal développés par le moteur 1. Le constructeur détermine par exemple l'embrayage à utiliser, et donc ledit couple optimal, en fonction de l'encombrement disponible.

Il en va autrement lorsque le moteur 1 développe un couple important.

Durant une troisième phase de démarrage, lorsque le couple développé par le moteur atteint ledit couple optimal dudit embrayage, au début d'une phase de fonctionnement stabilisée, on contrôle la roue libre contrôlable principale 25 pour la faire fonctionner en mode connecté. En effet, on déplace la cage le long de l'axe longitudinal de la roue libre contrôlable par l'intermédiaire d'un doigt positionné dans une fente hélicoïdale de la cage, pour positionner les moyens de liaison sur les rampes de coincement.

Il est à noter que, du fait du nombre de dents des divers roues dentées 13, 14, 23, 24, le deuxième arbre secondaire 22 et la portion entraînable 25" associée de la roue libre contrôlable principale 25 tournent plus vite que le premier arbre secondaire 21 et la portion entraînante 25' associée de la roue libre contrôlable principale 25.

Dans le même temps ou successivement, on débraye l'embrayage 15 de manière à désolidariser sa partie menante 15' de sa partie menée 15".

Par suite, l'arbre de sortie 2 n'entraîne plus en rotation l'arbre d'entraînement 4 durant une phase transitoire courte.

La vitesse de rotation de l'arbre d'entraînement 4, de la quatrième roue dentée 24, du deuxième arbre secondaire 22 et de la portion entraînable 25" chute et devient inférieure à la vitesse de rotation de la portion entraînante 25' de la roue libre contrôlable principale 25.

La roue libre contrôlable principale 25 étant en mode connecté, la portion entraînante 25' de cette roue libre contrôlable principale 25 va de fait mettre en rotation la portion entraînable 25" de la roue libre contrôlable principale 25. Ainsi, l'arbre de sortie 2 met en mouvement l'arbre d'entraînement 4 via successivement la première roue dentée 13, la troisième roue dentée 23, le premier arbre secondaire 21, la roue libre contrôlable principale 25, le deuxième arbre secondaire 22 et la quatrième roue dentée 23.

A l'inverse, lorsque l'aéronef se pose temporairement au sol, il est intéressant de stopper uniquement la rotation de l'hélice 6.

Selon l'invention, pour freiner au moins un moyen propulsif 7 à l'issue d'un atterrissage, durant une étape initiale on comprend que la roue libre contrôlable principale 25 de l'organe de liaison correspondant est en mode connecté pour entraîner l'hélice 6 du moyen propulsif 4, l'embrayage 15 de cet organe de liaison étant débrayé.

Durant une première étape transitoire visant à ralentir la vitesse de rotation de l'hélice 6, on modifie le pas des pales 6" de l'hélice 6 afin que ce pas devienne nul, puis on embraye l'embrayage 15 lorsque l'hélice 6 atteint une première vitesse prédéterminée. Plus précisément, le moyen de commande 30 embraye l'embrayage 15 en fonction d'informations de vitesse de l'hélice provenant de capteurs non représentés ou encore par le biais du capteur 31 du moteur 1 par exemple.

Durant une deuxième étape transitoire visant à ralentir la vitesse de rotation de l'hélice, on commande la roue libre contrôlable principale 25 pour la faire fonctionner en mode déconnecté. Ainsi, on déplace la cage de la roue libre contrôlable principale 25 pour éloigner les moyens de liaison des rampes de coincement.

Dès lors, durant une étape de freinage, on débraye l'embrayage lorsque l'hélice 6 atteint une deuxième vitesse prédéterminée puis on active le moyen de freinage 9 du moyen propulsif 7 pour freiner l'hélice 6.

Par ailleurs, pour accélérer l'hélice après un atterrissage temporaire, on désactive le moyen de freinage 9 de l'hélice 6 puis on peut alors embrayer, à l'aide du moyen de commande 30, l'embrayage 15 afin que la partie menante 15' soit en contact avec la partie menée 15". Le deuxième arbre primaire 12 effectue dès lors un mouvement rotatif et entraîne, via la deuxième et la quatrième roues dentées 14, 24, l'arbre d'entraînement 4 ainsi que le moyen propulsif 5. Ainsi on met en rotation l'hélice 6.

De plus, le deuxième arbre secondaire 22 est aussi mis en rotation. Néanmoins, on note que les portions entraînante 25' et entraînable 25" de la roue libre contrôlable principale 25 ne sont pas en prises l'une avec l'autre, la roue libre contrôlable principale 25 étant déconnectée.

Lorsque le couple développé par le moteur atteint un couple optimal prédéterminé, on contrôle la roue libre contrôlable principale 25 pour la faire fonctionner en mode connecté.

Dans le même temps ou successivement, on débraye l'embrayage 15 de manière à désolidariser sa partie menante 15' de sa partie menée 15".

Conformément à la variante représentée à l'aide de traits en pointillé, l'aéronef peut comprendre une pluralité de moyens propulsifs 7, 7', l'arbre d'entraînement 4 mettant alors en mouvement un moyen de conjugaison relié à l'ensemble des moyens propulsifs 7, 7'.

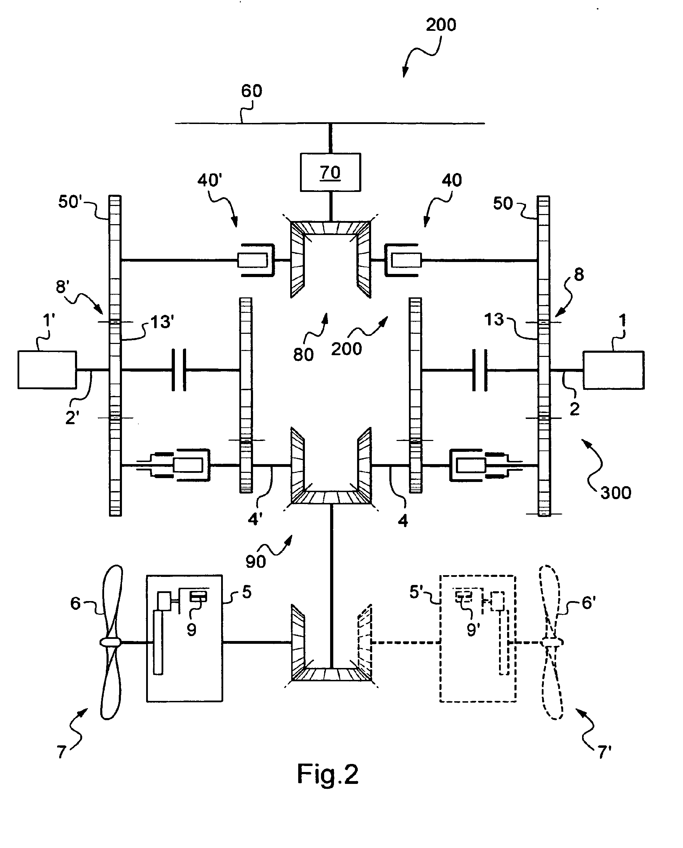

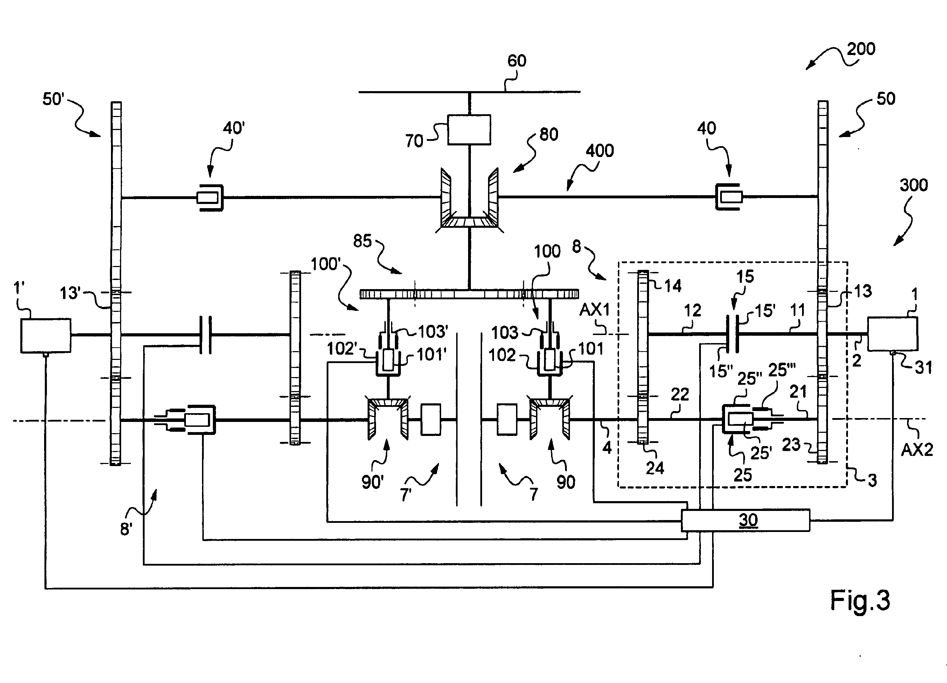

En référence aux figures 2 et 3, selon un deuxième mode de réalisation, l'installation motrice 300 comporte au moins un premier moteur 1 et un deuxième moteur 1' coopérant chacun avec un organe de liaison 8, 8'.

L'aéronef comporte alors un premier moteur 1 ayant un premier arbre de sortie 2 entraînant un premier organe de liaison 8 lié à un premier pignon d'entraînement principal 50 de la chaîne cinématique 400. Ce premier pignon d'entraînement principal 50 entraîne un moyen de conjugaison principal 80 par une première roue libre 40, ce moyen de conjugaison 80 mettant en mouvement une boîte de transmission de puissance 70 de la voilure tournante 60. De plus, le premier organe de liaison 8 entraîne par un premier arbre d'entraînement 4 au moins un moyen propulsif 7.

De même, l'aéronef comporte alors un deuxième moteur 1' ayant un deuxième arbre de sortie 2' entraînant un deuxième organe de liaison 8' lié à un deuxième pignon d'entraînement principal 50' de la chaîne cinématique 400. Ce deuxième pignon d'entraînement principal 50' entraîne le moyen de conjugaison principal 80 par une deuxième roue libre 40'. De plus, le deuxième organe de liaison 8' entraîne par un deuxième arbre d'entraînement 4 au moins un moyen propulsif 7.

Selon la première variante du deuxième mode de réalisation représentée sur la figure 2, l'ensemble des moteurs 1, 1' entraîne conjointement l'ensemble des moyens propulsifs 7, 7'.

Ainsi, le premier arbre d'entraînement 4 et le deuxième arbre d'entraînement 4' mettent en mouvement un moyen de conjugaison secondaire 90, entraînant au moins un moyen propulsif 7, 7'.

En revanche, selon la deuxième variante du deuxième mode de réalisation représentée sur la figure 3, chaque moteur 1, 1' entraîne un moyen propulsif 7, 7'. Ainsi, il est possible de stopper un unique moyen propulsif au sol.

Selon cette deuxième variante, il est possible de prévoir additionnellement une roue libre contrôlable secondaire par moyen propulsif, afin que chaque moteur puisse entraîner l'ensemble des moyens propulsifs si nécessaire.

Dès lors, l'aéronef comporte par exemple un premier arbre d'entraînement 4 du premier organe de liaison 8 qui entraîne un premier moyen d'entraînement 90 d'un premier moyen propulsif 7, le premier moyen d'entraînement 90 étant mécaniquement relié au moyen de conjugaison principal 80 par une première roue libre contrôlable secondaire 100.

Une portion entraînante 101 de la première roue libre contrôlable secondaire 100 est par conséquent liée au moyen de conjugaison principal 80 et une portion entraînable 102 de la première roue libre contrôlable secondaire 100 est liée au premier moyen d'entraînement 90.

De même, un deuxième arbre d'entraînement 4' du deuxième organe de liaison entraîne un deuxième moyen d'entraînement 90' d'un deuxième moyen propulsif 7', le deuxième moyen d'entraînement 90' étant mécaniquement relié audit moyen de conjugaison principal 80 par une deuxième roue libre contrôlable secondaire 100'.

Une portion entraînante 101' de la deuxième roue libre contrôlable secondaire 100' est par suite liée au moyen de conjugaison principal 80 et une portion entraînable 102' de la deuxième roue libre contrôlable secondaire 100' est liée au deuxième moyen d'entraînement 90'.

Les roues libres contrôlables secondaires 100, 101' sont alors en mode connecté en vol afin qu'un moteur puisse suppléer l'autre moteur en cas de panne.

Par contre, pour freiner l'hélice du moyen propulsif correspondant, durant la deuxième étape transitoire visant à ralentir la vitesse de rotation de l'hélice, on débraye la roue libre contrôlable secondaire pour la faire fonctionner en mode déconnecté.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Aéronef (200) muni d'une installation motrice (300) qui entraîne une voilure tournante (60) et au moins un moyen propulsif (7, 7') possédant une hélice (6, 6'), ladite installation motrice (300) comportant au moins un moteur (1, 1') ayant un arbre de sortie (2, 2') mettant en mouvement une chaîne cinématique (400) afin d'entraîner ladite voilure tournante (60), ladite chaîne cinématique (400) ayant une roue libre principale (40, 40') par moteur (1, 1'), **caractérisé en ce qu'**il comporte un organe de liaison (8, 8') par moteur (1, 1') pourvu d'un arbre d'entraînement (4, 4') et d'une première roue dentée (13) qui sont liés par un embrayage (15) et une roue libre contrôlable principale (25) agencés en parallèle, ledit arbre d'entraînement (4, 4') entraînant au moins un moyen propulsif (7, 7') pourvu d'un moyen de freinage (9, 9') de son hélice (6, 6'), ladite première roue dentée (13) engrenant ladite chaîne cinématique (400), ladite roue libre contrôlable principale (25) fonctionnant soit selon un mode déconnecté durant lequel une portion entraînante (25') de la roue libre contrôlable principale (25) ne peut en aucun cas mettre en mouvement une portion entraînable (25") de cette roue libre contrôlable principale (25), soit selon un mode connecté durant lequel la portion entraînante (25') met en rotation la portion entraînable (25") dès qu'une première vitesse de rotation de la portion entraînante (25') devient supérieure ou égale à une deuxième vitesse de rotation de la portion entraînable (25") alors qu'à l'inverse la portion entraînante (25') n'est pas apte à mettre en rotation ladite portion entraînable (25") lorsque la première vitesse de rotation est inférieure à la deuxième vitesse de rotation.

2. Aéronef selon la revendication 1, **caractérisé en ce que** ledit organe de liaison comporte :

    - un premier et un deuxième arbres primaires (11, 12) solidarisés audit embrayage (15), ledit premier arbre primaire (11) étant muni d'une première roue dentée primaire (13) pourvue d'un premier nombre de dents (P1) et ledit deuxième arbre primaire (12) étant muni d'une deuxième roue dentée primaire (14) pourvue d'un deuxième nombre de dents (P2), la première roue dentée primaire (13) étant engrenée avec ladite deuxième roue dentée primaire (14) et ladite chaîne cinématique (400),
    - un premier et un deuxième arbres secondaires (21, 22) solidarisés à ladite roue libre contrôlable principale (25), ledit premier arbre secondaire (21) étant muni d'une première roue dentée secondaire (23) pourvue d'un troisième nombre de dents (R1) en prise avec ladite première roue dentée primaire (13), ledit deuxième arbre secondaire (22) étant muni d'une deuxième roue dentée secondaire (24) pourvue d'un quatrième nombre de dents (R2) en prise avec ladite deuxième roue dentée primaire (14), ledit arbre d'entraînement (4) étant solidaire en rotation de la deuxième roue dentée secondaire (24).

3. Aéronef selon la revendication 2, **caractérisée en ce que** lesdits premier et deuxième arbres primaires (11, 12) étant disposés sur un même premier axe de rotation (AX1), lesdits premier et deuxième arbres secondaires (21, 22) étant disposés sur un même deuxième axe de rotation (AX2), lesdits premier et deuxième arbres primaires (11, 12) sont parallèles auxdits premier et deuxième arbres secondaires (21, 22).

4. Aéronef selon la revendication 2, **caractérisée en ce que**, le premier quotient (Q1) du troisième nombre de dents (R1) par le premier nombre de dents (P1) est supérieur à l'unité, le produit de ce premier quotient (Q1) par un deuxième quotient (Q2) du deuxième nombre de dents (P2) par le quatrième nombre de dents (R2) étant aussi supérieur à l'unité.

5. Aéronef selon l'une quelconque des revendications 1 à 4, **caractérisé en ce qu'**il comporte au moins un moyen de commande (30) dudit embrayage (15) et de ladite roue libre contrôlable principale (25).

6. Aéronef selon l'une quelconque des revendications 1 à 5, **caractérisé en ce qu'**il comporte au moins :

    - un premier moteur (1) ayant un premier arbre de sortie (2) entraînant un premier organe de liaison (8) lié à un premier pignon d'entraînement principal (50) de ladite chaîne cinématique (400), ce premier pignon d'entraînement principal (50) entraînant un moyen de conjugaison principal (80) par une première roue libre (40), le moyen de conjugaison (80) entraînant une boîte de transmission de puissance (70) de ladite voilure tournante (60), ledit premier organe de liaison (8) entraînant par un premier arbre d'entraînement (4) au moins un moyen propulsif (7),
    - un deuxième moteur (1') ayant un deuxième arbre de sortie (2') entraînant un deuxième organe de liaison (8') lié à un deuxième pignon d'entraînement principal (50'), ce deuxième pignon d'entraînement principal (50') entraînant ledit moyen de conjugaison principal (80) par une deuxième roue libre (40'), ledit deuxième organe de liaison (8') entraînant par un deuxième arbre d'entraînement (4') au moins un moyen propulsif (7').

7. Aéronef selon la revendication 6,

**caractérisé en ce que** ledit premier arbre d'entraînement (4) et ledit deuxième arbre d'entraînement (4') entraînent un moyen de conjugaison secondaire (90) mettant en mouvement au moins un moyen propulsif (7, 7'), chaque moyen propulsif (7, 7') ayant une hélice (6, 6') et un moyen de freinage (9, 9').

8. Aéronef selon la revendication 6,
   **caractérisé en ce qu'**il comporte au moins :

   - un premier arbre d'entraînement (4) dudit premier organe de liaison (8) entraîne un premier moyen d'entraînement (90) d'un premier moyen propulsif (7), le premier moyen d'entraînement (90) étant mécaniquement relié audit moyen de conjugaison principal (80) par une première roue libre contrôlable secondaire (100),
   - un deuxième arbre d'entraînement (4') dudit deuxième organe de liaison (8') entraîne un deuxième moyen d'entraînement (90') d'un deuxième moyen propulsif (7'), le deuxième moyen d'entraînement (90') étant mécaniquement relié audit moyen de conjugaison principal (80) par une deuxième roue libre contrôlable secondaire (100').

9. Aéronef selon la revendication 8,
   **caractérisé en ce qu'**une portion entraînante (101) de ladite première roue libre contrôlable secondaire (100) est liée audit moyen de conjugaison principal (80) et une portion entraînable (102) de ladite première roue libre contrôlable secondaire (100) est liée au premier moyen d'entraînement (90), une portion entraînante (101') de ladite deuxième roue libre contrôlable secondaire (100') est liée audit moyen de conjugaison principal (80) et une portion entraînable (102') de ladite deuxième roue libre contrôlable secondaire (100') est liée au deuxième moyen d'entraînement (90').

10. Procédé pour freiner au moins un moyen propulsif (7, 7') à hélice (6, 6') d'un aéronef (200) à voilure tournante (60) selon l'une quelconque des revendications 1 à 9, l'aéronef (200) étant muni d'une installation motrice (300) entraînant une voilure tournante (60) et au moins un moyen propulsif (7, 7') possédant une hélice (6), ladite installation motrice (300) comportant au moins un moteur (1, 1') ayant un arbre de sortie (2, 2') pour mettre en mouvement une chaîne cinématique (400) afin d'entraîner ladite voilure tournante (60), ladite chaîne cinématique (400) ayant une roue libre principale (40, 40') par moteur (1, 1'), ledit aéronef (200) comportant un organe de liaison (8, 8') pourvu d'un arbre d'entraînement (4, 4') et d'une première roue dentée (13) liés par un embrayage (15) et une roue libre contrôlable principale (25) agencés en parallèle, ledit arbre d'entraînement (4, 4') entraînant au moins un moyen propulsif (7, 7') pourvu d'un moyen de freinage (9, 9') de son hélice (6, 6'), au cours duquel pour freiner ladite hélice (6, 6') au sol suite à un atterrissage,

   - durant une étape initiale, ladite roue libre contrôlable principale (25) est en mode connecté pour entraîner ladite hélice (6, 6'), ledit embrayage (15) étant débrayé,
   - durant une première étape transitoire visant à ralentir la vitesse de rotation de l'hélice (6, 6'), on modifie le pas des pales (6") de ladite hélice (6, 6'), afin que ledit pas devienne nul, puis on embraye ledit embrayage (15) lorsque ladite hélice (6, 6') atteint une première vitesse prédéterminée,
   - durant une deuxième étape transitoire visant à ralentir la vitesse de rotation de l'hélice, on déconnecte ladite roue libre contrôlable principale (25) pour la faire fonctionner en mode déconnecté,
   - durant une étape de freinage, on débraye ledit embrayage (15) lorsque ladite hélice (6, 6') atteint une deuxième vitesse prédéterminée puis on active le moyen de freinage (9, 9') du moyen propulsif (7, 7') pour freiner l'hélice (6, 6').

11. Procédé selon la revendication 10,
    **caractérisé en ce que** ledit aéronef (200) comportant une roue libre contrôlable secondaire (100, 100') agencée entre un moyen d'entraînement (80) du moyen propulsif (7, 7') à freiner et la chaîne cinématique (400) permettant à l'installation motrice (300) de mettre en rotation ladite voilure tournante (60), durant une étape initiale, ladite roue libre contrôlable secondaire (100, 100') étant durant l'étape initiale en mode connecté pour que ladite chaîne cinématique (400) puisse entraîner ledit moyen propulsif (7, 7'), durant la deuxième étape transitoire visant à ralentir la vitesse de rotation de l'hélice, on débraye ladite roue libre contrôlable secondaire (100, 100') pour la faire fonctionner en mode déconnecté.

12. Procédé selon l'une quelconque des revendications 10 à 11,
    **caractérisé en ce que** pour accélérer ladite hélice (6, 6') suite à une étape de freinage :

    - on désactive le moyen de freinage (9) puis on embraye ledit embrayage (15),
    - lorsque le couple développé par ledit moteur atteint un couple optimal prédéterminé, on contrôle la roue libre contrôlable principale (25) pour la faire fonctionner en mode connecté, et on débraye ledit embrayage (15).

**Claims**

1. Aircraft (200) provided with a power plant (300) driving a rotary wing (60) and at least one propulsion means (7, 7') possessing a propeller (6, 6'), said power plant (300) comprising at least one engine (1, 1') having an output shaft (2, 2') setting into movement a drive train (400) in order to drive said rotary wing (60), said drive train (400) having one main freewheel (40, 40') per engine (1, 1'),
**characterised in that** it comprises one coupling member (8, 8') per engine (1, 1') provided with a drive shaft (4, 4') and with a first toothed wheel (13) which are coupled by a clutch (15) and a main controllable freewheel (25) which are arranged in parallel, said drive shaft (4, 4') driving at least one propulsion means (7, 7') provided with brake means (9, 9') for braking its propeller (6, 6'), said first toothed wheel (13) meshing with said drive train (400), said main controllable freewheel (25) operating either in a disconnected mode during which a driving portion (25') of the main controllable freewheel (25) can under no circumstances set into movement a drivable portion (25") of said main controllable freewheel (25), or in a connected mode during which the driving portion (25') sets into rotation the drivable portion (25") as soon as a first speed of rotation of the driving portion (25') becomes greater than or equal to a second speed of rotation of the drivable portion (25"), whereas conversely the driving portion (25') is not suitable for setting into rotation said drivable portion (25") when the first speed of rotation is less than the second speed of rotation.

2. Aircraft according to Claim 1,
**characterised in that** said coupling member comprises:

   - first and second primary shafts (11, 12) secured to said clutch (15), said first primary shaft (11) being provided with a first primary toothed wheel (13) provided with a first number of teeth (P1), and said second primary shaft (12) being provided with a second primary toothed wheel (14) provided with a second number of teeth (P2), the first primary toothed wheel (13) meshing with said second primary toothed wheel (14) and with said drive train (400),
   - first and second secondary shafts (21, 22) secured to said main controllable freewheel (25), said first secondary shaft (21) being provided with a first secondary toothed wheel (23) provided with a third number of teeth (R1) meshing with said first primary toothed wheel (13), said second secondary shaft (22) being provided with a second secondary toothed wheel (24) provided with a fourth number of teeth (R2) meshing with said second primary toothed wheel (14), said drive shaft (4) being integral in rotation with the second secondary toothed wheel (24).

3. Aircraft according to Claim 2,
**characterised in that** said first and second primary shafts (11, 12) are arranged on a common first axis of rotation (AX1), said first and second secondary shafts (21, 22) are arranged on a common second axis of rotation (AX2), and said first and second primary shafts (11, 12) are parallel to said first and second secondary shafts (21, 22).

4. Aircraft according to Claim 2,
**characterised in that** the first quotient (Q1) of the third number of teeth (R1) by the first number of teeth (P1) is greater than unity, and the product of said first quotient (Q1) with a second quotient (Q2) of the second number of teeth (P2) by the fourth number of teeth (R2) is also greater than unity.

5. Aircraft according to any one of Claims 1 to 4,
**characterised in that** it comprises at least one control means (30) for controlling said clutch (15) and said main controllable freewheel (25).

6. Aircraft according to any one of Claims 1 to 5,
**characterised in that** it comprises at least:

   - a first engine (1) having a first output shaft (2) driving a first coupling member (8) coupled to a first main drive gear (50) of said drive train (400), said first main drive gear (50) driving main interlink means (80) via a first freewheel (40), the main interlink means (80) driving a gearbox (70) of said rotary wing (60), said first coupling member (8) driving via a first drive shaft (4) at least one propulsion means (7),
   - a second engine (1') having a second output shaft (2') driving a second coupling member (8') coupled to a second main drive gear (50'), said second main drive gear (50') driving said main interlink means (80) via a second freewheel (40'), said second coupling member (8') driving via a second drive shaft (4') at least one propulsion means (7').

7. Aircraft according to Claim 6,
**characterised in that** said first drive shaft (4) and said second drive shaft (4') drive secondary interlink means (90) setting into movement at least one propulsion means (7, 7'), each propulsion means (7, 7') having a propeller (6, 6') and brake means (9, 9').

8. Aircraft according to Claim 6,
**characterised in that** it comprises at least:

   - a first drive shaft (4) of said first coupling member (8) drives first drive means (90) of first propulsion means (7), the first drive means (90) being mechanically connected to said main interlink means (80) via a first secondary controllable freewheel (100),

- a second drive shaft (4') of said second coupling member (8') drives second drive means (90') of second propulsion means (7'), the second drive means (90') being mechanically connected to said main interlink means (80) via a second secondary controllable freewheel (100').

9. Aircraft according to Claim 8,
**characterised in that** a driving portion (101) of said first secondary controllable freewheel (100) is coupled to said main interlink means (80), and a drivable portion (102) of said first secondary controllable freewheel (100) is coupled to the first drive means (90), a driving portion (101') of said second secondary controllable freewheel (100') is coupled to said main interlink means (80), and a drivable portion (102') of said second secondary controllable freewheel (100') is coupled to the second drive means (90').

10. Method for braking at least one propulsion means (7, 7') having a propeller (6, 6') of an aircraft (200) having a rotary wing (60), according to any one of Claims 1 to 9, the aircraft (200) being provided with a power plant (300) driving a rotary wing (60) and at least one propulsion means (7, 7') possessing a propeller (6), said power plant (300) comprising at least one engine (1, 1') having an output shaft (2, 2') for setting into movement a drive train (400) in order to drive said rotary wing (60), said drive train (400) having one main freewheel (40, 40') per engine (1, 1'), said aircraft (200) comprising a coupling member (8, 8') provided with a drive shaft (4, 4') and with a first toothed wheel (13) which are coupled by a clutch (15) and a main controllable freewheel (25) which are arranged in parallel, said drive shaft (4, 4') driving at least one propulsion means (7, 7') provided with brake means (9, 9') for braking its propeller (6, 6'), in the course of which, in order to brake said propeller (6, 6') on the ground after a landing,

- during an initial step, said main controllable freewheel (25) is in connected mode for driving said propeller (6, 6'), said clutch (15) being disengaged,
- during a first transitional step seeking to slow the speed of rotation of the propeller (6, 6'), the pitch of the blades (6") of said propeller (6, 6') is changed so that said pitch becomes zero, and then said clutch (15) is engaged when said propeller (6, 6') reaches a predetermined first speed,
- during a second transitional step seeking to slow the speed of rotation of the propeller, said main controllable freewheel (25) is disconnected to cause it to operate in disconnected mode,
- during a braking step, said clutch (15) is disengaged when said propeller (6, 6') reaches a second predetermined speed, and then the braking means (9, 9') of the propulsion means (7, 7') are activated in order to brake the propeller (6, 6').

11. Method according to Claim 10,
**characterised in that**, for said aircraft (200) comprising a secondary controllable freewheel (100, 100') arranged between drive means (80) of the propulsion means (7, 7') to be braked and the drive train (400) enabling the power plant (300) to set into rotation said rotary wing (60), during an initial step, said secondary controllable freewheel (100, 100') being in connected mode during the initial step so that said drive train (400) can drive said propulsion means (7, 7'), and during the second transitional step seeking to slow the speed of rotation of the propeller, said secondary controllable freewheel (100, 100¹) is disengaged to cause it to operate in disconnected mode.

12. Method according to any one of Claims 10 to 11,
**characterised in that** in order to accelerate said propeller (6, 6') after a braking step:

- the braking means (9) are deactivated and then said clutch (15) is engaged,
- when the torque developed by said engine reaches a predetermined optimum torque, the main controllable freewheel (25) is controlled to cause it to operate in connected mode, and said clutch is disengaged (15).

**Patentansprüche**

1. Flugzeug (200) mit einer Motoranlage (300), die einen Drehflügel (60) und mindestens ein Antriebsmittel (7, 7') mit einem Propeller (6, 6') antreibt, wobei die Motoranlage (300) mindestens einen Motor (1, 1') mit einer Ausgangswelle (2, 2') aufweist, die einen Antriebsstrang (400) in Bewegung setzt, um den Drehflügel (60) anzutreiben, wobei der Antriebsstrang (400) einen Hauptfreilauf (40, 40') pro Motor (1, 1') aufweist,
**dadurch gekennzeichnet, dass** es aufweist: ein Verbindungsorgan (8, 8') pro Motor (1, 1') mit einer Antriebswelle (4, 4') und einem ersten Zahnrad (13), die über eine Kupplung (15) und einen steuerbaren Hauptfreilauf (25), die parallel zueinander angeordnet sind, verbunden sind, wobei die Antriebswelle (4, 4') mindestens ein Antriebsmittel (7, 7') antreibt, welches mit einem Bremsmittel (9, 9') seines Propellers (6, 6') versehen ist, wobei das erste Zahnrad (13) mit dem Antriebsstrang (400) in Eingriff steht, wobei der steuerbare Hauptfreilauf (25) entweder gemäß einem entkoppelten Modus funktioniert, in dem ein antreibender Teil (25') des steuerbaren Hauptfreilaufs (25) auf keinen Fall einen antreibbaren Teil (25") dieses steuerbaren Hauptfreilaufs (25) in Bewegung setzen kann, oder gemäß einem verbundenen Modus, in dem der antreibende Teil (25') den antreibbaren Teil (25") in eine Drehbewegung versetzt, sobald eine erste Drehgeschwindigkeit des antreibenden Teils (25') größer oder gleich einer zweiten Drehgeschwindigkeit des antreibbaren Teils (25") wird, wohingegen der antreibende Teil (25') nicht in der Lage ist, den antreibbaren Teil (25") in eine Drehbewegung zu versetzen, wenn die erste Drehgeschwindigkeit kleiner als die zweite Drehgeschwindigkeit ist.

2. Flugzeug nach Anspruch 1,
**dadurch gekennzeichnet, dass** das Verbindungsorgan aufweist:

- eine erste und eine zweite Hauptwelle (11, 12), die mit der Kupplung (15) fest verbunden sind, wobei die erste Hauptwelle (11) mit einem ersten Hauptzahnrad (13) mit einer ersten Anzahl an Zähnen (P1) versehen ist, und die zweite Hauptwelle (12) mit einem zweiten Hauptzahnrad (14) mit einer zweiten Anzahl von Zähnen (P2) versehen ist, wobei das erste Hauptzahnrad (13) mit dem zweiten Hauptzahnrad (14) und dem Antriebsstrang (400) in Eingriff steht,
- eine erste und eine zweite Nebenwelle (21, 22), die mit dem steuerbaren Hauptfreilauf (25) fest verbunden sind, wobei die erste Nebenwelle (21) mit einem mit einer dritten Anzahl an Zähnen (R1) versehenen ersten Nebenzahnrad (23) ausgestattet ist, das mit dem ersten Hauptzahnrad (13) in Eingriff steht, und die zweite Nebenwelle (22) mit einem mit einer vierten Anzahl an Zähnen (R2) versehenen zweiten Nebenzahnrad (24) ausgestattet ist, das mit dem zweiten Hauptzahnrad (14) in Eingriff steht, wobei die Antriebswelle (4) drehfest mit dem zweiten Nebenzahnrad (24) verbunden ist.

3. Flugzeug nach Anspruch 2,
**dadurch gekennzeichnet, dass** die ersten und zweiten Hauptwellen (11, 12) auf einer selben ersten Drehachse (AX1) angeordnet sind, wobei die ersten und zweiten Nebenwellen (21, 22) auf einer selben zweiten Drehachse (AX2) angeordnet sind, wobei die ersten und zweiten Hauptwellen (11, 12) parallel zu den ersten und zweiten Nebenwellen (21, 22) angeordnet sind.

4. Flugzeug nach Anspruch 2,
**dadurch gekennzeichnet, dass** der erste Quotient (Q1) aus der dritten Anzahl von Zähnen (R1) durch die erste Anzahl von Zähnen (P1) größer als 1 ist, und das Produkt aus diesem ersten Quotienten (Q1) multipliziert mit einem zweiten Quotienten (Q2) aus der zweiten Anzahl von Zähnen (P2) durch die vierte Anzahl von Zähnen (R2) ebenfalls größer als 1 ist.

5. Flugzeug nach einem der Ansprüche 1 bis 4,
**dadurch gekennzeichnet, dass** es mindestens ein Steuermittel (30) der Kupplung (15) und des steuerbaren Hauptfreilaufs (25) aufweist.

6. Flugzeug nach einem der Ansprüche 1 bis 5,
**dadurch gekennzeichnet, dass** es mindestens aufweist:

- einen ersten Motor (1) mit einer ersten Ausgangswelle (2), die ein erstes Verbindungsorgan (8) antreibt, welches mit einem ersten Hauptantriebszahnrad (50) des Antriebsstrangs (400) verbunden ist, wobei dieses erste Hauptantriebszahnrad (50) ein Hauptverbindungsmittel (80) über einen ersten Freilauf (40) antreibt, wobei das Verbindungsmittel (80) ein Leistungsgetriebe (70) des Drehflügels (60) antreibt, wobei das erste Verbindungsorgan (8) über eine erste Antriebswelle (4) mindestens ein Antriebsmittel (7) antreibt,
- einen zweiten Motor (1') mit einer zweiten Ausgangswelle (2'), die ein zweites Verbindungsorgan (8') antreibt, welches mit einem zweiten Hauptantriebszahnrad (50') verbunden ist, wobei dieses zweite Hauptantriebszahnrad (50') das Hauptverbindungsmittel (80) über einen zweiten Freilauf (40') antreibt, wobei das zweite Verbindungsorgan (8') über eine zweite Antriebswelle (4') mindestens ein Antriebsmittel (7') antreibt.

7. Flugzeug nach Anspruch 6,
**dadurch gekennzeichnet, dass** die erste Antriebswelle (4) und die zweite Antriebswelle (4') ein Nebenverbindungsmittel (90) antreiben, welches mindestens ein Antriebsmittel (7, 7') in Bewegung setzt, wobei jedes Antriebsmittel (7, 7') einen Propeller (6, 6') und ein Bremsmittel (9, 9') aufweist.

8. Flugzeug nach Anspruch 6,
**dadurch gekennzeichnet, dass** es mindestens aufweist:

- eine erste Antriebswelle (4) des ersten Verbindungsorgans (8), die ein erstes Antriebsmittel (90) eines ersten Vortriebsmittels (7) antreibt, wobei das erste Antriebsmittel (90) mechanisch mit dem Hauptverbindungsmittel (80) über einen ersten steuerbaren Nebenfreilauf (100) verbunden ist,

- eine zweite Antriebswelle (4') des zweiten Verbindungsorgans (8'), die ein zweites Antriebsmittel (90') eines zweiten Vortriebsmittels (7') antreibt, wobei das zweite Antriebsmittel (90') mechanisch mit dem Hauptverbindungsmittel (80) über einen zweiten steuerbaren Nebenfreilauf (100') verbunden ist.

9. Flugzeug nach Anspruch 8,
**dadurch gekennzeichnet, dass** ein antreibender Teil (101) des ersten steuerbaren Nebenfreilaufs (100) mit dem Hauptverbindungsmittel (80) verbunden ist, und ein antreibbarer Teil (102) des ersten steuerbaren Nebenfreilaufs (100) mit dem ersten Antriebsmittel (90) verbunden ist, wobei ein antreibender Teil (101') des zweiten steuerbaren Nebenfreilaufs (100') mit dem Hauptverbindungsmittel (80) verbunden ist, und wobei ein antreibbarer Teil (102') des zweiten steuerbaren Nebenfreilaufs (100') mit dem zweiten Antriebsmittel (90') verbunden ist.

10. Verfahren zum Bremsen mindestens eines Vortriebsmittels (7, 7') mit Propeller (6, 6') eines Flugzeugs (200) mit Drehflügeln (60) nach einem der Ansprüche 1 bis 9, wobei das Flugzeug (200) mit einer Motoranlage (300) versehen ist, die einen Drehflügel (60) und mindestens ein Vortriebsmittel (7, 7'), welches einen Propeller (6) besitzt, antreibt, wobei die Motoranlage (300) mindestens einen Motor (1, 1') aufweist, mit einer Ausgangswelle (2, 2') zum In-Bewegung-Setzen eines Antriebsstrangs (400), um den Drehflügel (60) anzutreiben, wobei der Antriebsstrang (400) einen Hauptfreilauf (40, 40') pro Motor (1, 1') aufweist, wobei das Flugzeug (200) ein Verbindungsmittel (8, 8') aufweist, mit einer Antriebswelle (4, 4') und einem ersten Zahnrad (13), welches über eine Kupplung (15) und einen dazu parallel angeordneten steuerbaren Hauptfreilauf (25) verbunden ist, wobei die Antriebswelle (4, 4') mindestens ein Vortriebsmittel (7, 7') antreibt, welches mit einem Mittel zum Bremsen (9, 9') seines Propellers (6, 6') versehen ist, in dessen Verlauf, um den Propeller (6, 6') am Boden nach einer Landung zu bremsen,

- während einer Anfangsphase der steuerbare Hauptfreilauf (25) in dem gekoppelten Modus ist, um den Propeller (6, 6') anzutreiben, wobei die Kupplung (15) ausgekoppelt ist,
- während einer ersten Übergangsphase, die darauf abzielt, die Drehgeschwindigkeit des Propellers (6, 6') zu verlangsamen, der Neigungswinkel der Rotorblätter (6") des Propellers (6, 6') verändert wird, damit der Neigungswinkel Null wird, und anschließend die Kupplung (15) eingekuppelt wird, wenn der Propeller (6, 6') eine erste vorbestimmte Geschwindigkeit erreicht,
- während einer zweiten Übergangsphase, die darauf abzielt, die Drehgeschwindigkeit des Propellers zu verlangsamen, der steuerbare Hauptfreilauf (25) entkoppelt wird, um ihn im entkoppelten Modus arbeiten zu lassen,
- während einer Bremsphase die Kupplung (15) eingekuppelt wird, wenn der Propeller (6, 6') eine zweite vorbestimmte Geschwindigkeit erreicht, und dann das Mittel zum Bremsen (9, 9') des Vortriebsmittels (7, 7') aktiviert wird, um den Propeller (6, 6') zu bremsen.

11. Verfahren nach Anspruch 10,
**dadurch gekennzeichnet, dass** das Flugzeug (200) einen steuerbaren Nebenfreilauf (100, 100') aufweist, der zwischen einem Antriebsmittel (80) des Vortriebsmittels (7, 7') angeordnet ist, um den Antriebsstrang (400) zu bremsen, was es der Motoranlage (300) ermöglicht, den Drehflügel (60) in Rotation zu versetzen, wobei während einer Anfangsphase der steuerbare Nebenfreilauf (100, 100') im eingekoppelten Modus ist, damit der Antriebsstrang (400) das Vortriebsmittel (7, 7') antreiben kann, wobei während der zweiten Übergangsphase, die darauf abzielt, die Drehgeschwindigkeit des Propellers zu verlangsamen, der steuerbare Nebenfreilauf (100, 100') entkoppelt wird, um ihn im entkoppelten Modus arbeiten zu lassen.

12. Verfahren nach einem der Ansprüche 10 oder 11,
**dadurch gekennzeichnet, dass** nach einer Bremsphase zum Beschleunigen des Propellers (6, 6'):

- das Bremsmittel (9) deaktiviert wird und dann die Kupplung (15) eingekuppelt wird,
- wenn das von dem Motor entwickelte Drehmoment ein vorbestimmtes optimales Drehmoment erreicht, der steuerbare Hauptfreilauf (25) so gesteuert wird, dass er im eingekuppelten Modus arbeitet, und die Kupplung (15) ausgekuppelt wird.

Fig.1

Fig.2

Fig.3

EP 2 431 274 B1

**EP 2 431 274 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007086906 A
- FR 2670553
- FR 2928192
- US 20060269414 A